# EUROPÄISCHE PATENTSCHRIFT

(11) **EP 1 138 365 B1**
(45) Veröffentlichungstag und Bekanntmachung des Hinweises auf die Patenterteilung: **03.11.2004**
(21) Anmeldenummer: 01104084.7
(22) Anmeldetag: 21.02.2001
(51) Int. Cl.: B01D 39/08, B01D 39/16, D04H 1/54

(54) **Verfahren zur Herstellung eines plissierfähigen Filtermaterials aus einem Vliesstoff**
A method of manufacturing a pleatable filter material comprising a non-woven fabric
Procédé de production d'un matériau filtrant pouvant être plissé comprenant un tissu non-tissé

(30) Priorität: 31.03.2000 DE 10016182
(43) Veröffentlichungstag der Anmeldung: 04.10.2001
(73) Patentinhaber: Carl Freudenberg KG, 69469 Weinheim (DE)
(72) Erfinder: Veeser, Klaus, Dr., 69469 Weinheim (DE); Dantz, Dirk, Dr., 69469 Weinheim (DE); Hollingsworth, Anthony, 69488 Birkenau (DE)

(56) Entgegenhaltungen:
- DE-A- 19 630 522

## Beschreibung

### Technisches Gebiet

Die vorliegende Erfindung betrifft ein Verfahren zur Herstellung eines plissierfähigen Filtermaterials aus einem Vliesstoff, der aus dem Filtermaterial selbst geformte Abstandshalter für Plissierfalten aufweist.

### Stand der Technik

Durch die US-BS 3,531,920 ist ein Verfahren zur Herstellung eines plissierten Filtermediums mit geprägten Ausbuchtungen bekannt. Nach diesem Verfahren wird das Filtermaterial von einer Rolle zu einer Presse geführt, die aus zwei beheizten, in entgegengesetzter Richtung drehbaren Zylindern besteht. Die Zylinder sind mit ineinandergreifenden Ausbuchtungen und dazu korrespondierenden Vertiefungen versehen, und das zwischen ihnen durchgeführte Filtermaterial wird durch Tiefziehen bleibend verformt. Der Verformungsvorgang beeinflusst die Struktur des Filtermaterials im tiefgezogenen Bereich und verändert dadurch die ursprünglichen Filtereigenschaften in den für die Filtrierung wichtigen Bereichen.

Eine Verbesserung des voranstehenden Verfahrens wird durch die in der EP 0 429 805 A2 beschriebene Verfahrensweise erreicht. Hier wird ein ebenes Filtermedium mittels Rollen schräg zur Laufrichtung gerafft und in das geraffte Material werden anschließend über Backen einer Formgebungseinrichtung längliche Ausbuchtungen eingeprägt. Die Raffung verhindert, dass der durch die geprägten Ausbuchtungen zusätzliche Materialbedarf nicht zu Spannungen im Material führt und die Struktur im tiefgezogenen Bereich des Filtermediums verändert wird. Aber auch dieses Verfahren weist den Nachteil auf, dass die durch die Prägung gebildeten Abstandshalter nur über einen Teil der Filterfläche eingeprägt werden können.

Weiterhin ist aus der DE 196 30 522 A1 bekannt, einen Faserflor aus verstreckten und unverstreckten Synthesefasern zwischen profilierten Kalanderwalzen zu rillieren und zu verfestigen. Durch dieses Verfahren konnte ein Filtermaterial aus einem Vliesstoff erzeugt werden, ohne dass eine Veränderung der Homogenität des Vliesstoffs eintrat. Die erwünschte Rillierung war jedoch insofern nicht voll befriedigend, da sie außerhalb der Kalanderwalzen durch die Zugkraft zum Materialtransport teilweise wieder eingeebnet wurde.

### Darstellung der Erfindung

Der Erfindung liegt deshalb die Aufgabe zugrunde ein Verfahren zur Herstellung eines Filtermaterials zu schaffen, bei dem das erzeugte Filtermaterial eine hohe Stabilität hat. Die eingeformten Abstandshalter sollen sowohl im Herstellungsprozess als auch im späteren Filtrationsbetrieb unter Einfluss mechanischer und/oder thermischer Belastung ihre Form beibehalten und eine hohe Stabilität zeigen.

Die Lösung der gestellten Aufgabe wird bei einem Verfahren der eingangs genannten Art erfindungsgemäß dadurch erreicht, dass ein Faserflor bestehend aus Bikomponentenfasern mit einer thermoplastischen Faserkomponente aus verstreckten Synthesefasern und einem thermoplastischen und/oder thermisch vernetzenden Bindemittel in einem Ofen auf eine Temperatur erhitzt wird, die mindestens im Erweichungstemperaturbereich und/oder im Vernetzungstemperaturbereich des Bindemittels liegt, und dass daran anschließend der Faserflor zwischen profilierten Kalanderwalzen gleichzeitig geformt und gekühlt wird. Diese Vorgehensweise ergibt ein Filtermaterial mit äußerst hoher Stabilität und Formhaltevermögen, wobei gleichzeitig die Filtrationseigenschaften in höchstem Maße beibehalten wurden.

Die verstreckten Synthesefasern sind erforderlich, um dem Filtermaterial ganz allgemein die gewünschte Festigkeit zu verleihen. Das Bindemittel wird eingesetzt, um eine stabile Struktur der Fasern untereinander zu erreichen. Dabei kann es sich sowohl um einen thermoplastisches als auch um ein thermisch vernetzendes Bindemittel handeln. Die Temperatur, mit der der Faserflor im Ofen behandelt wird, wird so eingestellt, dass bei dem Faserflor mit einem thermoplastischen Bindemittel mindestens der Erweichungstemperaturbereich des Bindemittels erreicht wird. Dadurch werden die einzelnen Fasern über das Bindemittel miteinander verbunden.

Bei einem thermisch vernetzenden Bindemittel wird die Temperatur im Ofen soweit erhöht, bis der Vernetzungstemperaturbereich erreicht wird, in dem eine kontrollierte Vernetzung stattfindet. Die Vernetzung wird soweit geführt, bis eine stabile Struktur des Faserflors vorliegt. Der so behandelte Faserflor wird sodann Kalanderwalzen zugeführt, die eine niedrigere Temperatur als die Ofentemperatur haben. Während der Kalandrierung wird der Faserflor gekühlt und gleichzeitig geformt, d. h. die geformten Abstandshalter eingebracht. Es zeigte sich, dass der Faserflor nach dem Verlassen der Kalanderwalzen eine sehr hohe bleibende Stabilität hat.

Eine sehr günstige Möglichkeit den Faserflor herzustellen und ein thermoplastisches Bindemittel einzubringen besteht darin, dass während der Vliesstoffherstellung in den Vliesstoff Bikomponentenfasern mit einer - thermoplastischen Faserkomponente eingebracht werden. Geeignete Bikomponentenfasern hierfür sind Fasern mit einer Kern- Mantelstruktur einer Inselstruktur oder auch einer side-by-side Struktur. Die Bikomponentenfasern können durch Mischen der Faserkomponenten oder durch Einspinnen in den Faserflor eingebracht werden. Unter Erhitzung im Ofen wird die thermoplastische Komponente der Bikomponentenfasern erweicht oder geschmolzen und die gewünschte Verbindung der Fasern im Faserflor findet statt.

Die Temperatur wird so gewählt, daß mindestens die Erweichung oder das Aufschmelzen der Binderkomponente erfolgt. Dies wird allgemein im Bereich zwischen 90°C und 240°C erreicht. Durch das Schmelzen und das Wiedererstarren des Polymers während des Abkühlens im Kalander wird die gewünschte Verbindung der Fasern herbeigeführt.

Möglich ist aber auch die Verwendung von vernetzenden Bindemitteln in anderer Form (Pulver, Dispersion, Lösung), die in den Faserflor eingebracht oder auf den Faserflor aufgebracht werden können. Letzteres kann beispielsweise dadurch geschehen, dass das Bindemittel auf den Faserflor aufgespritzt wird. Möglich ist auch eine Vorgehensweise, bei der das Bindemittel durch Tränken oder Imprägnieren in den Faserflor eingebracht wird.

Die Temperatur im Ofen wird so eingestellt, dass der Verbindungsvorgang zuverlässig in möglichst kurzer Zeit erfolgt. Je nach Art der thermoplastischen Bindemittel wird die Temperatur auf den Erweichungstemperaturbereich oder auch auf den Schmelztemperaturbereich des Bindemittels eingestellt. Generell wird die Temperatur im Ofen zwischen 100° und 240° C eingestellt, je nach Art des zu verwendenden Bindemittels. Bei einer Kern-Mantelstruktur der Bikomponentenfasern wird eine Temperatur gewählt, die unterhalb der Schmelztemperatur des Kerns liegt, dabei sollte jedoch ein Wert von 25°C unterhalb des Schmelzpunktes der Kernkomponente nicht überschritten werden. Der Mantel wird auf seine eigene Schmelztemperatur erhitzt, hierdurch ergibt sich eine gute Verklebung der Mantelschichten.

Die Temperatur der Kalanderwalzen wird so gewählt, dass sie unterhalb des Erweichungstemperaturbereichs des Bindemittels liegt. Allgemein beträgt der Temperaturbereich etwa 70° - 150° C. Um den Verfahrensprozess möglichst einfach zu gestalten, wird ein Temperaturbereich von 80° - 90° C bevorzugt. Die Walzentemperatur muß den Faserflor soweit abkühlen, dass eine bleibende Verformung durchgeführt werden kann. Die Temperatur der Kalanderwalzen und die Verweilzeit des Faserflors zwischen den Kalanderwalzen ist auf das jeweilige Bindemittel einzustellen.

Neben der Formgebung des ungebundenen Faserflores in eine dreidimensionale Struktur erfolgt gleichzeitig eine Kalibrierung des Faserflores auf eine gleichmäßige Dicke im Kalander. Obwohl der Faserflor bereits unter der Hitzeeinwirkung im Ofen Volumen verliert, findet die endgültig Kalibrierung erst zwischen den Kalanderwalzen statt.

Die bevorzugte Ausführungsform sieht vor, dass der Faserflor durch die Kalanderwalzen gleichmäßig zusammengedrückt wird, ohne dass Inhomogenitäten auf seiner Fläche entstehen können. Die gewünschten Abstandshalter können unterschiedlicher Ausführungsform sein. Die bevorzugte Ausführungsform sieht jedoch vor, dass die Abstandshalter durch eine sinusförmige Welle im Filtermaterials gebildet wird. Die Wellenberge und Wellentäler verlaufen in Laufrichtung angeordnet.

Verwendet werden hierfür profilierte Kalanderwalzen, wie sie beispielsweise in der DE 196 30 522 A1 gezeigt sind. Die Rillierung ist über den gesamten Querschnitt gleichmäßig und auch das Filtermaterial hat eine gleichmäßige Dicke. Durch eine entsprechende Ausbildung der Kalanderwalzen ist es aber auch möglich, den Faserflor in vorgegebenen Querschnittsbereichen einer verstärkten Pressung zu unterwerden, so dass an diesen Stellen eine größere Steifigkeit im Filtermaterial erreicht werden kann.

Möglich ist selbstverständlich aber auch eine Ausbildung der Abstandshalter durch voneinander beabstandete Erhebungen beziehungsweise Vertiefungen. Hierdurch können bestimmte Filtermaterialien gebildet werden. Unterschiedliche Geometrien sind denkbar.

Die Rillierung oder Erhebungen im Filtermaterial werden im Hinblick auf den späteren Einsatz des Filtermaterials gewählt. Im Allgemeinen muß ihre Höhe mindestens einem Viertel der Dicke des Filtermaterials entsprechen.

### Kurzbeschreibung der Zeichnung

Anhand der beigefügten Zeichnung wird die Erfindung näher erläutert.
Es zeigt:
- Figur 1:: schematisch die Durchführung des Fasersflors durch einen Ofen mit Kalanderwalzen,
- Figur 2:: ein rilliertes Filtermaterial im Querschnitt;
- Figur 3:: eine andere Form eines rillierten Filtermaterials im Querschnitt.

### Ausführung der Erfindung

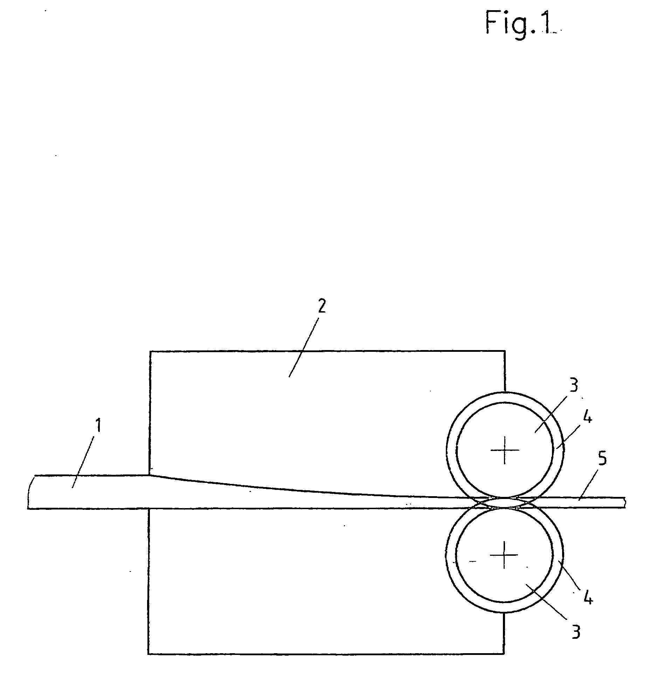

In der Figur 1 ist schematisch die Verfahrensweise dargestellt. Der Faserflor 1 wird dem Ofen 2 zugeführt und darin erhitzt. Das Erhitzen kann durch ein heißes Gas, z.B. Luft, durch Infrarotstrahler oder andere Einrichtungen gegebenenfalls in deren Kombination erfolgen. Durch den Erhitzungsvorgang wird das thermoplastische Bindemittel, das im Faserflor 1 enthalten ist, soweit erhitzt, dass es mindestens seine Erweichungstemperatur erreicht. Es findet dann, wie in der Figur angedeutet, ein Komprimieren des Faserflors 1 statt, so dass der Faserflor 1 seine Dicke verringert. Die Kalanderwalzen 3 drehen gegenläufig und sind mit einer Oberflächenprofilierung 4 versehen.

Es handelt sich hier um eine wellenförmige Profilierung, wobei die Wellenkronen von jeweils einer Kalanderwalze 3 auf die Wellentäler der anderen Kalanderwalze 3 ausgerichtet sind. Der Abstand der einzelnen Kalanderwalzen 3 zueinander ist so gewählt, dass der Faserflor 1 nicht völlig zusammengepresst wird, sondern dass zwischen den Walzen 3 ein Freiraum für den Durchtritt des Faserflors 1 besteht. Dieser Abstand bestimmt die Dicke des Filtermaterials 5, zu dem der Faserflor 1 nach Verlassen der Kalanderwalzen 3 geworden ist.

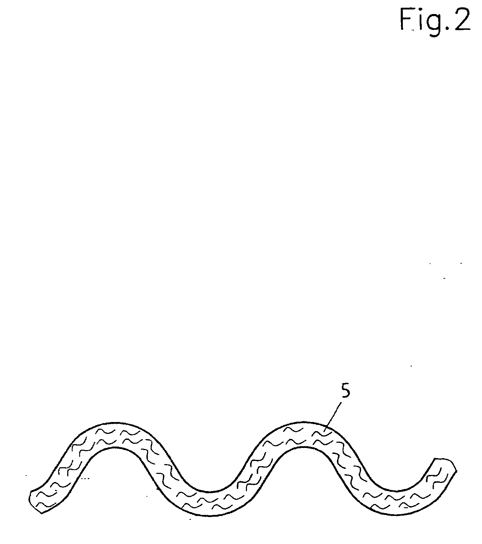

In der Figur 2 ist ein Abschnitt des Filtermaterials 5 im Querschnitt gezeigt. Diese vergrößerte und vergröberte Darstellung gibt wieder, dass das Filtermaterial 5 durch die Walzen 3 eine rillierte Struktur erhalten hat, die gleichbleibend über den gesamten Querschnitt des Filtermaterials 5 ist. Aus diesem Filtermaterial 5 kann durch Faltung ein plissierter Filter hergestellt werden, bei dem die Rillierung als Abstandshalter wirkt.

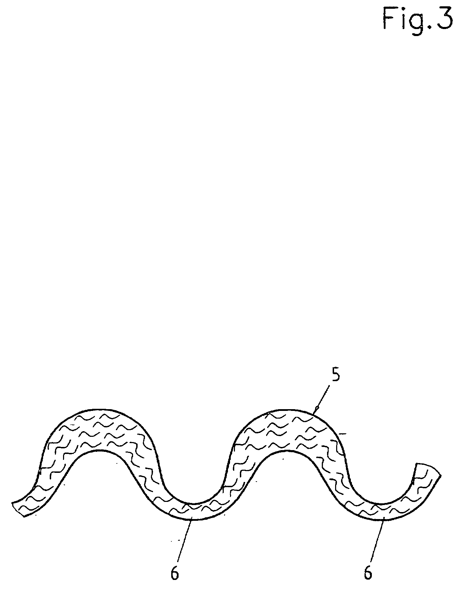

In der Figur 3 ist, in gleicher Weise wie in Figur 2, ein Teil des Filtermaterials 5 im Querschnitt gezeigt. Bei diesem Filtermaterial 5 sind Querschnittsbereiche 6 vorhanden, die einer verstärkten Pressung unterworfen wurden. Diese kann beispielsweise dadurch erzielt werden, dass die Wellenrahmen der einen Walze stärker nach oben hervorstehen als die Wellenrahmen der anderen gegenläufigen Walze.

## Patentansprüche

1. Plissierfähiges Filtermaterial aus einem Vliesstoff mit einem Faserflor bestehend aus verstreckten Synthesefasern die durch ein Bindemittel miteinander verbunden sind, und der aus dem Filtermaterial selbst geformte Abstandshalter für die Plissierfalten aufweist, **dadurch gekennzeichnet, dass** das Bindemittel ein thermisch vernetzendes Bindemittel oder ein thermoplastisches Bindemittel ist, wobei letzteres aus Bikomponentenfasem mit einer thermoplastischen Faserkomponente besteht.

2. Filtermaterial nach Anspruch 1, **dadurch gekennzeichnet, dass** die Bikomponentenfasem und der Faserflor miteinander vermischt sind.

3. Filtermaterial nach Anspruch 1 oder 2, **dadurch gekennzeichnet, dass** das thermisch vemetzende Bindemittel den Faserflor (1) bedeckt.

4. Filtermaterial nach Anspruch 1 oder 4, **dadurch gekennzeichnet, dass** das thermisch vemetzende Bindemittel den Faserflor (1) durchtränkt.

5. Filtermaterial nach einem der Ansprüche 1 bis 4, **dadurch gekennzeichnet, dass** das Bindemittel eine Kombination aus einem thermoplastischen und einem thermisch vemetzenden Bindemittel ist.

6. Filtermaterial nach einem der Ansprüche 1 bis 6, **dadurch gekennzeichnet, dass** der Faserflor (1)in vorgegebenen Querschnittsbereichen (6) verstärkt verpresst ist.

7. Verfahren zur Herstellung eines plissierfähigen Filtermaterials aus einem Vliesstoff, der aus dem Filtermaterial selbst geformte Abstandshalter für die Plissierfalten aufweist, und bei dem ein Faserflor bestehend aus verstreckten Synthesefasern und einem Bindemittel auf eine Temperatur erhitzt wird, die im Erweichungstemperaturbereich des Bindemittels liegt, so dass eine Verbindung der Synthesefasern miteinander stattfindet und dass daran anschließend der Faserflor zwischen profilierten Kalanderwalzen gleichzeitig geformt und gekühlt wird, **dadurch gekennzeichnet, dass** als Bindemittel ein thermisch vemetzendes Bindemittel oder ein thermoplastisches Bindemittel verwendet wird, wobei das zweitgenannte aus Bikomponentenfasern mit einer thermoplastischen Faserkomponente besteht.

8. Verfahren nach Anspruch 7, **dadurch gekennzeichnet, dass** die Bikomponentenfasem durch Mischen der Faserkomponenten oder durch Einspinnen in den Faserflor eingebracht werden oder in den Faserflor (1) eingesponnen sind.

9. Verfahren nach Anspruch 7, **dadurch gekennzeichnet, dass** das thermisch vernetzende Bindemittel auf den Faserflor (1) aufgesprüht ist.

10. Verfahren nach Anspruch 7, **dadurch gekennzeichnet, dass** das thermisch vernetzende Bindemittel durch, Tränken oder Imprägnieren in den Faserflor (1) eingebracht ist.

11. Verfahren nach einem der Ansprüche 7 bis 10, **dadurch gekennzeichnet, dass** als Bindemittel eine Kombination aus einem thermoplastischen und thermisch vemetzenden Bindemittel eingesetzt wird.

12. Verfahren nach einem der Ansprüche 7 bis 11, **dadurch gekennzeichnet, dass** der Faserflor (1) im Ofen (2) auf eine Temperatur erhitzt wird, die im Schmelztemperaturbereich des Bindemittels liegt.

13. Verfahren nach einem der Ansprüche 7 bis 12, **dadurch gekennzeichnet, dass** die Ofentemperatur zwischen 100° und 240°C liegt.

14. Verfahren nach einem der Ansprüche 7 bis 12, **dadurch gekennzeichnet, dass** die Ofentemperatur bei 200°C liegt.

15. Verfahren nach einem der Ansprüche 7 bis 14, **dadurch gekennzeichnet, dass** die Kalanderwalzentemperatur zwischen 70° und 150°C liegt.

16. Verfahren nach einem der Ansprüche 7 bis 14, **dadurch gekennzeichnet, dass** die Kalandrierwalzentemperatur zwischen 80° und 90°C liegt.

17. Verfahren nach einem der Ansprüche 7 bis 16, **dadurch gekennzeichnet, dass** der Faserflor (1) durch die Kalanderwalzen (3) in vorgegebenen Querschnittsbereichen (6) einer verstärkten Pressung unterworfen ist.

18. Verfahren nach einem der Ansprüche 7 bis 17, **dadurch gekennzeichnet, dass** der Kalandriervorgang mit einer Kalibrierung des Faserflors verbunden ist.

19. Verfahren nach einem der Ansprüche 7 bis 18, **dadurch gekennzeichnet, dass** ein Faserflor (1) mit einem Flächengewicht von 60 bis 400 g/m² eingesetzt wird.

20. Verfahren nach einem der Ansprüche 7 bis 18, **dadurch gekennzeichnet, dass** ein Faserflor (1) mit einem Flächengewicht von 200 g/m², eingesetzt wird.

## Claims

1. A pleatable filter material composed of a nonwoven fabric which comprises a fibrous web consisting of drawn synthetic fibres bound to each other by a binder and which has pleat-fold spacers formed from the filter material itself, **characterized in that** the binder is a thermally crosslinking binder or a thermoplastic binder, the latter consisting of bicomponent fibres having a thermoplastic fibrous component.

2. A filter material according to claim 1, **characterized in that** the bicomponent fibres and the fibrous web form a blend.

3. A filter material according to claim 1 or 2, **characterized in that** the thermally crosslinking binder covers the fibrous web (1).

4. A filter material according to claim 1 or 2, **characterized in that** the thermally crosslinking binder saturates the fibrous web (1).

5. A filter material according to any one of claims 1 to 4, **characterized in that** the binder is a combination of a thermoplastic binder and a thermally crosslinking binder.

6. A filter material according to any one of claims 1 to 5, **characterized in that** the fibrous web (1) is more highly compressed in predetermined cross-sectional regions (6).

7. A method of producing a pleatable filter material from a nonwoven fabric having pleat-fold spacers formed from the filter material itself, in which a fibrous web consisting of drawn synthetic fibres and a binder is heated to a temperature in the softening-temperature range of the binder, so that binding of the synthetic fibres with each other takes place and that subsequently the fibrous web is simultaneously formed and cooled between profiled calendering rolls, **characterized in that** the binder is a thermally crosslinking binder or a thermoplastic binder, the latter consisting of bicomponent fibres having a thermoplastic fibrous component.

8. A method according to claim 7, **characterized in that** the bicomponent fibres are incorporated in the fibrous web by blending of the fibrous components or by spinning into the fibrous web or have been spun into the fibrous web (1).

9. A method according to claim 7, **characterized in that** the thermally crosslinking binder is sprayed onto the fibrous web (1).

10. A method according to claim 7, **characterized in that** the thermally crosslinking binder is incorporated in the fibrous web (1) by saturating or impregnating.

11. A method according to any one of claims 7 to 10, **characterized in that** the binder is a combination of a thermoplastic binder and a thermally crosslinking binder.

12. A method according to any one of claims 7 to 11, **characterized in that** the fibrous web (1) is heated in an oven (2) to a temperature which is in the melting-temperature range of the binder.

13. A method according to any one of claims 7 to 12, **characterized in that** the oven temperature is between 100° and 240°C.

14. A method according to any one of claims 7 to 12, **characterized in that** the oven temperature is 200°C.

15. A method according to any one of claims 7 to 14, **characterized in that** the calendering-roll temperature is between 70° and 150°C.

16. A method according to any one of claims 7 to 14, **characterized in that** the calendering-roll temperature is between 80° and 90°C.

17. A method according to any one of claims 7 to 16, **characterized in that** the fibrous web (1) is subjected by the calendering rolls (3) to higher compression in predetermined cross-sectional regions (6).

18. A method according to any one of claims 7 to 17, **characterized in that** the fibrous web is calibrated in the course of the calendering operation.

19. A method according to any one of claims 7 to 18, **characterized in that** a fibrous web (1) having a basis weight in the range from 60 to 400 g/m² is used.

20. A method according to any one of claims 7 to 18, **characterized in that** a fibrous web (1) having a basis weight of 200 g/m² is used.

## Revendications

1. Matériau filtrant pouvant être plissé constitué d'un non-tissé avec un voile de carde se composant de fibres de synthèse étirées qui sont reliées ensemble par une matière adhésive, et présente pour les plis plissés des fils de retenue eux-mêmes formés par le matériau filtrant, **caractérisé en ce que** la matière adhésive est une matière adhésive à réticulation thermique ou une matière adhésive thermoplastique, cette dernière se composant de fibres biconstituantes avec une composante de fibre thermoplastique.

2. Matériau filtrant selon la revendication 1, **caractérisé en ce que** les fibres biconstituantes et le voile de carde sont mélangés ensemble.

3. Matériau filtrant selon la revendication 1 ou 2, **caractérisé en ce que** la matière adhésive à réticulation thermique recouvre le voile de carde (1).

4. Matériau filtrant selon la revendication 1 ou 2, **caractérisé en ce que** la matière adhésive à réticulation thermique imprègne le voile de carde (1).

5. Matériau filtrant selon l'une des revendications 1 à 4, **caractérisé en ce que** la matière adhésive est une combinaison d'une matière adhésive thermoplastique et à réticulation thermique.

6. Matériau filtrant selon l'une des revendications 1 à 5, **caractérisé en ce que** le voile de carde (1) est comprimé de façon renforcée dans des zones de section transversale prédéfinies (6).

7. Procédé de fabrication d'un matériau filtrant pouvant être plissé composé d'un non-tissé, qui présente pour les plis plissés des fils de retenue eux-mêmes formés par le matériau filtrant, et dans lequel un voile de carde se composant de fibres de synthèse étirés et d'une matière adhésive est chauffé à une température qui se trouve dans la zone de température de ramollissement de la matière adhésive, de sorte qu'une liaison des fibres de synthèse ensemble a lieu et qu'ensuite le voile de carde est formé et refroidi simultanément entre des rouleaux de calandre profilés, **caractérisé en ce que** comme matière adhésive, une matière adhésive à réticulation thermique ou une matière adhésive thermoplastique est utilisée, la deuxième citée se composant de fibres biconstituantes avec une composante de fibre thermoplastique.

8. Procédé selon la revendication 7, **caractérisé en ce que** les fibres biconstituantes sont agencées dans le voile de carde (1) en mélangeant les composantes de fibres ou en filant ou sont filées dans le voile de carde (1 ).

9. Procédé selon la revendication 7, **caractérisé en ce que** la matière adhésive à réticulation thermique est vaporisée sur le voile de carde (1).

10. Procédé selon la revendication 7, **caractérisé en ce que** la matière adhésive à réticulation thermique est agencée par saturation ou imprégnation dans le voile de carde (1).

11. Procédé selon l'une des revendications 7 à 10, **caractérisé en ce que** comme matière adhésive une combinaison d'une matière adhésive thermoplastique et à réticulation thermique est insérée.

12. Procédé selon l'une des revendications 7 à 11, **caractérisé en ce que** le voile de carde (1) est chauffé dans un four (2) à une température qui se trouve dans la zone de point de fusion de la matière adhésive.

13. Procédé selon l'une des revendications 7 à 12, **caractérisé en ce que** la température du four se situe entre 100° et 240°C.

14. Procédé selon l'une des revendications 7 à 12, **caractérisé en ce que** la température du four se situe à 200°C.

15. Procédé selon l'une des revendications 7 à 14, **caractérisé en ce que** la température des rouleaux de calandre se situe entre 70° et 150°C.

16. Procédé selon l'une des revendications 7 à 14, **caractérisé en ce que** la température des rouleaux de calandrage se situe entre 80° et 90°C.

17. Procédé selon l'une des revendications 7 à 16, **caractérisé en ce que** le voile de carde (1) est soumis à une pression renforcée par les rouleaux de calandre (3) dans des zones de section transversale prédéfinies (6).

18. Procédé selon l'une des revendications 7 à 17, **caractérisé en ce que** le processus de calandrage est lié à un calibrage du voile de carde.

19. Procédé selon l'une des revendications 7 à 18, **caractérisé en ce qu'**un voile de carde (1) est inséré avec un grammage de 60 à 400 g/m².

20. Procédé selon l'une des revendications 7 à 18, **caractérisé en ce qu'**un voile de carde (1) est inséré avec un grammage de 200 g/m².
